(19) Europäisches Patentamt
European Patent Office
Office européen des brevets

(11) **EP 3 819 209 B1**

(12) **EUROPEAN PATENT SPECIFICATION**

(45) Date of publication and mention
of the grant of the patent:
**29.03.2023 Bulletin 2023/13**

(21) Application number: **19208294.9**

(22) Date of filing: **11.11.2019**

(51) International Patent Classification (IPC):
*B64C 13/16* (2006.01)        *G05D 1/00* (2006.01)
*B64D 31/06* (2006.01)        *B64C 27/00* (2006.01)
*B64C 39/02* (2006.01)        *B64C 27/08* (2006.01)
*G05D 1/08* (2006.01)

(52) Cooperative Patent Classification (CPC):
**B64C 13/16; B64C 27/001; B64C 27/08;
B64C 39/024; B64D 31/06; B64U 10/13;
G05D 1/0858;** B64C 2027/004; B64U 2201/10

(54) **METHOD OF OPERATING AN AIRCRAFT AND AIRCRAFT OPERABLE ACCORDINGLY**

VERFAHREN ZUM BETRIEB EINES FLUGZEUGS UND ENTSPRECHEND BETREIBBARES FLUGZEUG

MÉTHODE D'EXPLOITATION D'UN AÉRONEF ET AÉRONEF EXPLOITABLE EN CONSÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.05.2021 Bulletin 2021/19**

(73) Proprietor: **Volocopter GmbH
76646 Bruchsal (DE)**

(72) Inventors:
• **Zwiener, Jan
76337 Waldbronn (DE)**
• **Yüksel, Burak
69120 Heidelberg (DE)**
• **Stephan, Johannes
70176 Stuttgart (DE)**

(74) Representative: **LBP Lemcke, Brommer & Partner
Patentanwälte mbB
Siegfried-Kühn-Straße 4
76135 Karlsruhe (DE)**

(56) References cited:
WO-A1-2010/099521        US-A- 4 819 182
US-A1- 2018 305 002        US-A1- 2019 168 867
US-A9- 2008 203 232

**Description**

The invention relates to a method of operating an aircraft, said aircraft comprising an elastic structure made from one or a plurality of structural parts, in the latter case interconnected via a plurality of mechanical connections, according to claim 1.

The invention also relates to an aircraft, preferably a VTOL (vertical take-off and landing) aircraft with a plurality of electrically powered propulsion units, comprising an elastic structure made from one or a plurality of structural parts, in the latter case interconnected via a plurality of mechanical connections, according to claim 10.

Mechanical structures are never perfectly rigid. There is always some level of elasticity within an elastic structure or between different mechanical systems, e.g., between the links of a robotic arm, between the legs of a chair or between the different components (structural parts and respective mechanical connections) of a land vehicle or an aircraft, etc.

Identifying the elasticity within an elastic structure or between different components of a complex system, e.g., an aircraft, is a highly challenging task and may be prone to mistakes if the identified parameters are imperfect. Hence, it is a common practice to use a rigid-body dynamics model of a complex system (e.g., an aircraft) when designing a control law.

Although such a control law could be sufficient for a wide range of operations, it would be vulnerable to structural oscillations due to structural elasticity or various elastic connections present within the system (e.g., bolt connections, structural elasticity, etc.).

Structural oscillations on an elastic body occur due to external forces and torques that are acting on the system, which system can be modeled as a complex mass-damper system with one or multiple degrees or freedom. Said forces and torques can be applied to the system in various ways, e.g., as aerodynamic forces, reaction forces during landing or while on the ground, inertial and Coriolis forces between different moving masses (especially when an aircraft is carrying a load suspended by a cable), or due to the body-fixed control forces as a result of controlled actuators.

Especially in an aircraft, which is an example for the systems considered here, structural oscillations need to be and can be reduced: One way of achieving this involves actively using the (flight) controller, i.e., a (flight) control unit that sends control commands to the system's actuators for damping the oscillations. This requires good knowledge of the elasticity in the system, which increases the complexity and model dependency of the controller. Uncertainties in complex models used in the controller can lead to instabilities (due to lack of robustness). Moreover, the controller can be exhausted by actively damping said oscillations, which is an expensive solution in terms of required power.

US 2019/168867 A1 refers to a system for transmitting and processing data for controlling a rotor blade actuator. More specifically, the prior art refers to an adjusting device that is arranged within the rotating system of a helicopter, which is configured to provide at least one first rotor blade actuator in order to minimize the computation effort and the diversity of parts and thus to provide more cost-efficient systems for the data transfer and processing for the controlling of a rotor blade actuator.

It is the object of the present invention to devise another way of reducing structural system oscillations which does not suffer from the above-mentioned disadvantages, thus reducing complexity, avoiding instabilities and requiring less power.

This object is achieved, according to a first aspect of the invention, by means of a method having the features of appended claim 1. The object is also achieved, according to a second aspect of the invention, by means of an aircraft having the features of appended claim 10.

Advantageous further embodiments of the invention are defined in the dependent claims.

According to the first aspect of the invention, applicant proposes a method of operating an aircraft, said aircraft comprising an elastic structure and/or a structure made from a plurality of structural parts interconnected via a plurality of mechanical connections, which parts and connections present inherent elasticity, said aircraft further comprising at least one actuator, which actuator is mechanically attached to said structure and which actuator is controlled by means of a control signal generated by a control unit, said aircraft further comprising at least one sensor unit for measuring a physical property of the aircraft,
the method comprising, during aircraft operation,

   a) detecting a first oscillation in an output signal of the sensor unit and/or in an estimated state of the aircraft;
   b) detecting a second oscillation in the control signal (preferably on a computed control signal and, if available, also on actuator states);
   c) comparing said first oscillation and said second oscillation;
   d) based on the comparison in step c), adapting a property of the control signal.

According to the second aspect of the invention, applicant proposes an aircraft, preferably a VTOL aircraft with a plurality of electrically powered propulsion units, comprising an elastic structure and/or a structure made from a plurality of structural parts interconnected via a plurality of mechanical connections, which parts and connections present inherent elasticity, said aircraft further comprising:

at least one actuator, which actuator is mechanically attached to said structure;
a control unit for controlling said actuator by means of a control signal generated by the control unit; and
at least one sensor unit for measuring a physical property of the aircraft;
the control unit being adapted for, during aircraft operation,

a) detecting a first oscillation in an output signal of the sensor unit and/or in an estimated state of the aircraft;
b) detecting a second oscillation in the control signal (preferably on a computed control signal and, if available, on actuator states);
c) comparing said first oscillation and said second oscillation;
d) based on the comparison in step c), adapting a property of the control signal.

The control signal contains oscillations, thus inducing structural oscillations. In this way, the control (i.e., a system control unit) is exciting the structure. As the structure oscillates, control obtains measurements with oscillations, since any sensors are on the structure, which leads to further oscillation of the structure. It can also start with an excitement from external forces that are not necessarily controlled, but when the structure is not damping them out naturally, then control excites them further, since there is always a phase lag between control and the system, i.e., the aircraft, especially when control bandwidth and the frequency of these oscillations coincide (or they are close-by). Detecting said second oscillation can be done on computed control signals and also, if available, on actuator states. If reliable actuator states are available, it is preferred to perform said detection on them for comparison.

In this way, the present invention involves using the physical properties of the aircraft and its natural damping by adaptively changing said property of the control signal, e.g., by changing a bandwidth of the controller (i.e., the control unit) such that the latter does no longer excite the structure in minor vicinity of frequencies where (resonant) oscillations can occur. This is an elegant solution with low inherent complexity for dealing with control excited natural structural oscillations, which is also cheap and effective in terms of justified power requirement. In the present description, this will be referred to as "adaptive controller".

In the following, various embodiments of the invention will be described with reference to an aircraft. The terms "aircraft" and "system" will be used as synonyms hereinafter.

According to an embodiment of the invention, one can consider two important sets of oscillation frequencies as described in the following:

- Known frequencies $\omega_k$: these frequencies can be measured offline, i.e., prior the operation of the system, by using, e.g., vibration sensors placed in various locations of an aircraft, and after some on-ground tests.
- Unknown frequencies $\omega_u$: these frequencies can be estimated online, i.e., during system operation, by using spectral analysis (e.g., a Fast Fourier Transformation: FFT) of the available sensor measurements and/or state estimations. The spectral analysis can be carried out on the output of sensors, which capture the structural oscillations, e.g., accelerations and angular rates by means of an IMU (inertial measurement unit). It is generally favorable to combine the signal of various sensor units, which are mounted in different locations of the structure, to enhance the observability of said oscillations. For example, for the oscillations in respect of attitude, one can use measurement data from IMUs (inertial measurement units, which measure accelerations, e.g., by means of accelerometers) and, if available, estimated attitudes (estimated angles and measured angular velocities, e.g., measured by means of gyroscopes). As another example, for the oscillations in respect of altitude, one can use measurement data from accelerometers and barometers, and/or, if available, estimated altitude (height and vertical velocity) which might or might not use measurements from other sensors as well, e.g., GNSS, radar, lidar, ultrasonic.

In a corresponding embodiment of the method according to the invention, step a) comprises performing a spectral analysis, preferably a Fast Fourier Transformation, FFT, on the sensor unit output signal and/or on state estimations.

In another embodiment of the method according to the invention, step b) comprises performing a spectral analysis, preferably a Fast Fourier Transformation, FFT, on the control signal.

In another embodiment of the method according to the invention, step c) comprises comparing a difference between an oscillation frequency $\omega_{cu}^{*}$ of said first oscillation and an oscillation frequency $\omega_{cu}^{u}$ of said second oscillation with a pre-set, preferably heuristic value $\delta\omega_{cu}$, and wherein step d) comprises adapting said property of the control signal if $|\omega_{cu}^{*} - \omega_{cu}^{u}| < \delta\omega_{cu}$. For example, in this context, symbol "*" may denote altitude ("alt") and attitude ("att"), respectively.

In another embodiment of the invention, said known frequencies may be used to define boundaries of the adaptive controller. This means that one can decide for a frequency region in which the controller shall be active, e.g., between $\omega_c^{min}$ [Hz] and $\omega_c^{max}$ [Hz]. One can make sure that no values in the set $\omega_k$ lie between $\omega_c^{min}$ and $\omega_c^{max}$, wherein $\omega_c^{min} < \omega_c^{max}$.

The method according to the invention comprises a detection step, i.e., steps a) and b) defined above.

This may involve collecting data from accelerometers, gyroscopes, barometers, other oscillation measuring sensors placed on the structure, and if available radar, lidar, or GNSS. Estimated values of attitude and altitude can be either fully or partially considered, depending on computational cost. As a measurable attitude state, gyroscope values (body frame rotational rates) are primarily used for analyzing oscillations in attitude.

For altitude, one can primarily use measured accelerations and the pressures from barometers. Again, if available, estimated values can be used for both.

"Estimated values" denotes values that are derived from model calculations without direct measurement.

In an embodiment of the invention, these data are fed into a Fast Fourier Transformation (FFT) block that can be comprised within the control unit for an online frequency analysis. Moreover, in a further embodiment, the computed control inputs are subjected to a spectral analysis (e.g., FFT) as well. By analyzing sensor data, e.g. attitude and altitude data, one can detect dominant frequencies (preferably above a predefined amplitude threshold), for a predefined time period. This is a preferred embodiment of step a) defined above. In yet a further embodiment, the same treatment can be applied to the computed control inputs, which is a preferred embodiment of step b) defined above. If the detected frequencies from sensor data, e.g. attitude and altitude data match with the frequencies of the control inputs (alternatively or additionally, one can also check for the phase shift) within predefined limits, which is a preferred embodiment of step c) defined above, one can conclude that the controller excites structural oscillations.

Based on the comparison in step c), a property of the control signal is adapted in step d), thus leading to an adaptive control(ler).

In a preferred embodiment of the method according to the invention, said property in step d) is a bandwidth of the control signal.

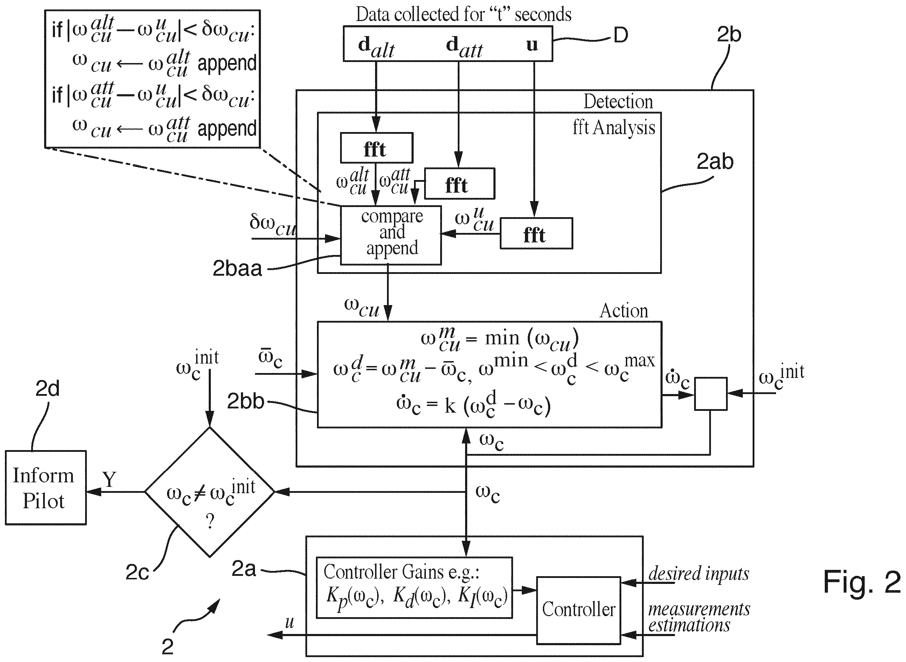

This procedure can be implemented in terms of a function called *fftAnalysis,* which can be performed by the controller (which can be devised, i.e., programmed accordingly), cf. appended Figure 2.

Step d), as defined above, can be regarded as an action step: This is where adaptive control tuning is performed, e.g., tuning of control(ler) bandwidth (and hence of control gains).

In a highly preferred embodiment, said action step may comprise the following:

Define $\overline{\omega}_c$ as a threshold value. This threshold value can be chosen heuristically or designed based on damping characteristics of the structure around $\omega_{cu}^m$ (to be defined below) and $\overline{\omega}_c$. It represents a safe frequency offset from the harmonics at which the structure is excited by the controller.

Define $\omega_{cu}^m = min(\omega_{cu})$, which is a minimum frequency at which the controller excites the structure, cf. appended Figure 2. Then define a desired control frequency for the adaptive tuning, which is away from $\omega_{cu}^m$ with a safety margin of $\overline{\omega}_c$:

$$\omega_c^d = \omega_{cu}^m - \overline{\omega}_c, \qquad\qquad (\text{Eq. 1})$$

while keeping in mind that $\omega_c^{min} < \omega_c^d < \omega_c^{max}$.

In a corresponding embodiment of the method according to the invention, the control unit is operated within a frequency range $\omega_c^{min} \leq \omega \leq \omega_c^{max}$, which frequency range excludes known resonant oscillation frequencies $\omega_k$ of the system. Note that, in a preferred embodiment, the desired control frequency is adaptively chosen based on the spectral analysis of aircraft data and control inputs, as detailed above.

Then, a linear first order dynamics of control bandwidth can be designed as in the following equation:

$$\dot{\omega}_c = k\big(\omega_c^d - \omega_c\big), \qquad\qquad (\text{Eq. 2})$$

for $k \in \mathbb{R}^+$, where $k$ is a positive scalar.

Correspondingly, in a highly preferred embodiment of the method according to the invention, step d) comprises:

da) defining $\omega_{cu}^m = min(\omega_{cu})$, which is a minimum frequency at which the control unit excites the structure;

db) then, defining a desired frequency $\omega_c^d$ for adaptive tuning of said property, which desired frequency is away from $\omega_{cu}^m$ with a safe margin $\overline{\omega}$: $\omega_c^d = \omega_{cu}^m - \overline{\omega}_c$, wherein $\omega_c^{min} < \omega_c^d < \omega_c^{max}$;

dc) then, defining a linear first order dynamics of adaptation as: $\dot{\omega}_c = k(\omega_c^d - \omega_c)$, where $k$ is a positive scalar;

dd) adapting said property of the control signal by means of $\dot{\omega}_c$.

Note that with proper initial conditions (i.e., the starting value of $\omega_c$, which can always be chosen properly, since it lies within the bandwidth of the nominal controller prior to any adaptive tuning), the dynamics given in Eq. 2 is stable and asymptotically converges to the desired control bandwidth $\omega_c^d$, which by design prevents the controller from exciting structural oscillations.

Thus, in another preferred embodiment of the method according to the invention, an initial value, $\omega_c^d$, is chosen as $\omega_c^d = \omega_c^{init}$, wherein $\omega_c^{init}$ denotes a nominal gain of the control unit.

This constitutes an exemplary new adaptive control method for reducing control excited structural oscillations, e.g., in aircraft, robots or other controlled systems. The proposed method, in the form of its embodiments described above, can be based on actively detecting the structural oscillations within a system using FFT analysis of various sensor measurements (and/or corresponding estimated values) and by comparing them with the frequency analysis of the control inputs. If the compared values match, a control signal can be adapted, e.g., a new desired bandwidth for the controller can be decided. In this way, the method regulates the bandwidth of the controller (or multiple controllers) by moving the control bandwidth of the controller instead of adjusting the controller by hand, which is usually carried out as a repeated sequence of gain tuning and testing. This brings the advantage of keeping stability properties of the originally controlled system also after the adaption. Hence, changing the gains of the controller does not excite the structural oscillations and benefits from the natural damping properties of the structure.

The idea proposed here is inexpensive to implement, safe and not complex. It does not change the existing stability properties of the system: the nominal controller preferably is parametrized with an initial control bandwidth $\omega_c^d = \omega_c^{init}$ (i.e., the controller gains), and the adaptation proposed by the present invention changes only $\omega_c$, which is bounded between known reasonable values, i.e., $\omega_c^{min} < \omega_c < \omega_c^{max}$.

For an aircraft system, it is preferred that in case $\omega_c \neq \omega_c^{init}$, i.e., when adaptation is taking place, the pilot is informed.

Thus, in a preferred embodiment of the method according to the invention, for an aircraft system, in the case of $\omega_c \neq \omega_c^{init}$, an information signal is output to a pilot of the aircraft. For other systems, said information signal may be output to a system operator.

In a corresponding embodiment of the system according to the invention, the system comprises an information signal output unit for outputting an information signal to a system operator.

In a preferred embodiment of the system according to the invention, the control unit is further adapted to perform any one of the additional method steps according to the aforementioned embodiments of the method according to the invention.

In another preferred embodiment of the system according to the invention, the system comprises a plurality of actuators distributed throughout the structure.

In yet another preferred embodiment of the system according to the invention, the at least one of the actuators is an electrically powered propulsion unit, preferably a propeller unit.

An alternative way of avoiding exciting the structural oscillations via control inputs could comprise using a band-pass filter at the output of the controller, which filters the control values around the frequency values where the structural oscillations occur (again $\omega_k$ and $\omega_u$ can be computed in the same way as mentioned above). This would result in an adaptive notch filter. Although this would be a suitable practical implementation, it introduces a completely new system dynamics to the controlled system. Hence, its impact on system stability is not trivial, especially since these frequencies are in the bandwidth of the controller. The notch filter and the controller may operate in the same frequency domain thus causing interference, which may introduce reduced stability margins or even instability of the control system. Therefore, the solution proposed here is to change the controller bandwidth, hence the location of the all closed-loop system pools and hence the frequencies at which the controller operates accordingly and in a controlled way, without jeopardizing the system stability.

Further details and advantages of the invention will now be described by way of example with reference to the appended drawings.

Fig. 1 shows an aircraft as an exemplary system operated by means of the method according to the invention;

Fig. 2 shows a block diagram depicting an algorithm for implementing the method according to the invention; and

Fig. 3 shows an example for detection and actions steps carried out during performance of the method according to the invention.

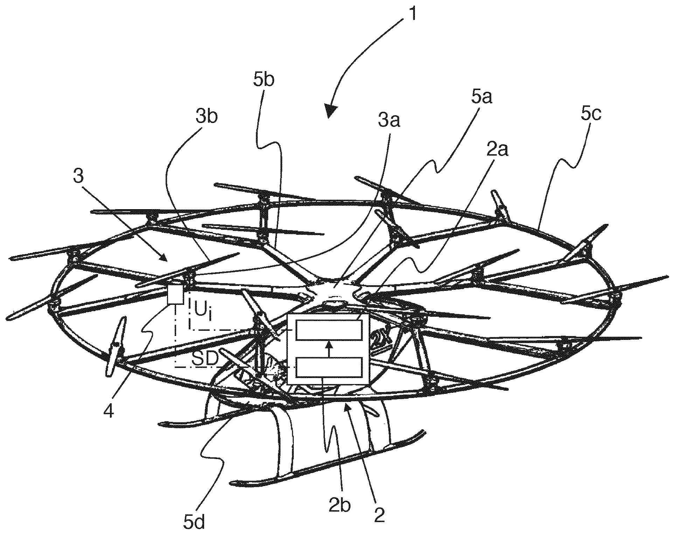

In Fig. 1, reference numeral 1 denotes a VTOL aircraft with a flight control unit (flight controller) 2 for controlling a plurality of actuators in the form of electrically powered propulsion units 3 by means of dedicated control inputs $u_i$, each of said propulsion units 3 comprising a motor 3a and a propeller or rotor 3b. A plurality of sensors 4 (only one shown in Fig. 1) can be distributed throughout a mechanical structure 5 of aircraft 1 for measuring physical properties thereof and for providing flight controller 2 with corresponding sensor data SD, as explained in detail above. Aircraft structure 5 comprises, inter alia, a central hub 5a, Y-shaped arms 5b extending from said central hub 5a, peripheral connecting beams 5c, and a passenger cabin 5d with attached landing gear. The individual parts of mechanical structure 5 are interconnected by means of mechanical connections (not shown) and form - together with said propulsion units 3 - a system with inherent elasticity that can be exited in (resonant) oscillations or vibrations if flight controller 2 controls propulsion units 3 with a corresponding control frequency. To overcome potential disadvantages of such vibrations, flight controller 2 comprises a feedback controller unit 2a in operative connection with an algorithm unit 2b for adapting said control frequency (control bandwidth), which will now be explained in more detail with reference to Fig. 2.

Fig. 2 shows implementation details of flight controller 2 comprising feedback controller unit 2a in operative connection with algorithm unit 2b, cf. Fig. 1, which form an adaptive controller.

The controller is active between $\omega_c^{min}$ [Hz] and $\omega_c^{max}$ [Hz]. These boundaries are chosen so that no known oscillation frequency $\omega_k$ lies between $\omega_c^{min}$ and $\omega_c^{max}$, wherein $\omega_c^{min} < \omega_c^{max}$.

Reference numeral 2ba implements a detection step involving Fast Fourier Transformation spectral analysis (fft): Data from different sensors e.g. accelerometers, gyroscopes, barometers, and, if available and if helpful, radar, lidar, GNSS and estimated values of attitude and altitude are collected over a period of time $t$ and are either fully or partially considered for the spectral analysis, depending on the computational cost. For example, as a measurable attitude state, gyroscope values (body frame rotational rates) are primarily used for the spectral analysis of oscillations in attitude. Said data is denoted by D in Fig. 2.

For altitude (subscript "alt"), for example, one can use the measured accelerations and the pressures from barometers. Again, if available, the estimated states can be used for both. These data are fed into a Fast Fourier Transformation (FFT) block for an online frequency analysis. Moreover, FFT is performed on the computed control inputs u (i.e., the $u_i$ of Fig. 1) or, if available, on the measured actuator states as well. By analyzing attitude (subscript "att") and altitude (subscript "alt") data, denoted $d_{alt}$ and $d_{att}$, respectively, one can detect dominant frequencies (those above a predefined amplitude threshold), for a predefined time period. The same analysis is then performed for the computed control inputs u (i.e., the $u_i$ of Fig. 1). If the frequencies from attitude and altitude data $d_{alt}$ and $d_{att}$, respectively, which are denoted $\omega_{cu}^{att}, \omega_{cu}^{alt}$ match with the frequencies of the control inputs $\omega_{cu}^u$ (one can also check for the phase shift), cf. the comparison at 2baa, then the flight controller 2 excites the structural oscillations (*detection step*), and $\omega_{cu}$ is appended as shown.

This procedure can be depicted with a function called *fftAnalysis,* which does the following:

$$\omega_{cu} = fftAnalysis(d_{alt}, d_{att}, u),$$

where $d_{alt}$ stands for altitude data, $d_{att}$ for attitude data, $u$ is the commanded control input to the actuators (e.g., RPMs) and $\omega_{cu}$ contains all the online identified frequencies with a specific time window, around which structure and control inputs oscillate. A heuristic value ($\delta\omega_{cu}$) can be considered for deciding when both structure and control inputs have some harmonics, i.e., when control excites the structure.

Reference numeral 2bb implements an action step and receives the $\omega_{cu}$ calculated during the detection step. This is where adaptive control bandwidth tuning is performed. Define $\overline{\omega_c}$ as a threshold value. This value can be chosen heuristically or designed based on damping characteristics of the structure around the excitation frequencies. It represents a safe frequency offset from the harmonics in which structure is excited by the controller.

Define $\omega_{cu}^m = min(\omega_{cu})$, which is the minimum frequency in which controller excites the structure. Then define a desired frequency $\omega_c^d$ for the adaptive tuning, which is away from $\omega_{cu}^m$ with a safe margin of $\overline{\omega_c}$:

$$\omega_c^d = \omega_{cu}^m - \overline{\omega}_c,$$

keeping in mind that $\omega_c^{min} < \omega_c^d < \omega_c^{max}$.

Note that the desired control frequency is adaptively chosen based on the spectral analysis on aircraft data and control inputs D. Then a linear first order dynamics of control bandwidth is designed as in the following equation:

$$\dot{\omega}_c = k\left(\omega_c^d - \omega_c\right),$$

where $k$ is a positive scalar.

Note that with proper initial conditions $\omega_c^{init}$ (i.e. the first value of $\omega_c$, which is chosen always properly, since it is the bandwidth of the nominal controller), the dynamics given in the above equation is stable and it asymptotically converges to the desired control bandwidth $\omega_c^d$, which by design prevents the flight controller from exciting the structural oscillations.

Note that this can be done separately for different controllers in e.g. an aircraft, for example only for altitude controller or only for attitude controller, depending on in which dimension(s) the structure is oscillated. For example, if oscillations occur around "pitch" axis only, then the controller gains used for the "pitch" torques can be adapted. Note that this method can be used to tune for all controllers as well.

The adapted control bandwidth $\omega_c$ as calculated by algorithm unit 2ba is then used by feedback controller 2a to adapt Controller Gains as shown. Gains K here represent the gains of a standard state feedback controller. The gains are computed based on the system dynamics and desired locations of the poles of the controlled system characteristics function (linear assumption). Desired locations of the poles are chosen as a function of frequency (or control bandwidth). Feedback controller 2a further receives desired inputs and measurements/estimations as input and outputs control input u to actuators (propulsion units) 3, cf. Fig. 1.

At reference numeral 2c there is a comparison to detect whether or not the adapted control bandwidth $\omega_c$ as calculated by algorithm unit 2ba differs from the initial conditions $\omega_c^{init}$. In the affirmative ("Y"), the pilot is informed at 2d, e.g., by displaying a suitable message on a dashboard of the aircraft.

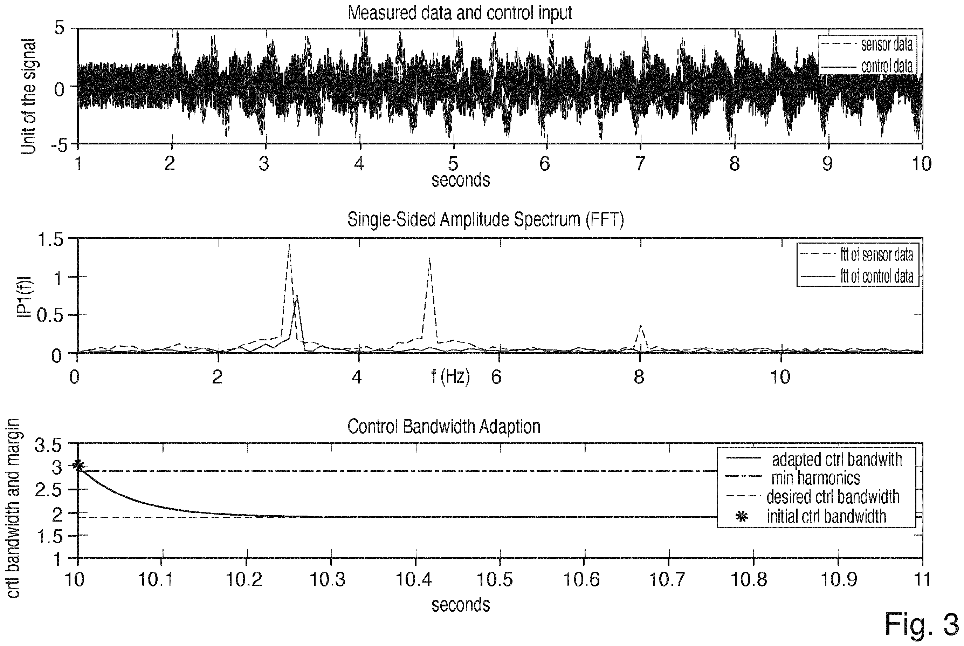

Fig. 3 shows an example for the detection and action steps implemented by algorithm 2b, cf. Fig. 2. The uppermost plot shows "sensor data" (e.g. $d_{att}$) and "control input" (e.g. u) in gray and black, respectively, cf. reference numeral D in Fig. 2. The middle plot shows the fft analysis of this data within a time interval $t = 10$ seconds (as an example). Note the frequencies around 3 Hz ($\omega_{cu}^m$): sensor data and control input have similar harmonics around this frequency. Hence, after the detection step is done, in the action step the control bandwidth is adapted from the initial value ($\omega_c^{init}$, above and around 3 Hz) to a desired frequency ($\omega_c^d$) just below 2 Hz (with a margin defined as $\overline{\omega_c}$) in a smooth and stable manner (e.g. within 300 ms, see the lowermost plot; note that time starts at $t = 10$ seconds (for example), i.e., after the detection step has been completed).

**Claims**

1. A method of operating an aircraft (1), said aircraft (1) comprising an elastic structure (5) made from one or a plurality of structural parts (5a-5d), in the latter case interconnected via a plurality of mechanical connections, which parts and connections present inherent elasticity, said aircraft (1) further comprising at least one actuator (3), which actuator (3) is mechanically attached to said structure (5) and which actuator (3) is controlled by means of a control signal (u) generated by a control unit (2), said aircraft (1) further comprising at least one sensor unit (4) for measuring a physical property of the aircraft (1),
the method comprising, during aircraft operation,

   a) detecting a first oscillation in an output signal (SD) of the sensor unit (4) and/or in an estimated state of the aircraft (1);
   b) detecting a second oscillation in the control signal (u), preferably on a computed control signal, and optionally, if available, also on actuator states; **characterised in that** the method comprises also:

   c) comparing said first oscillation and said second oscillation;
   d) based on the comparison in step c), adapting a property of the control signal (u).

2. The method of claim 1, wherein the control unit (2) is operated within a frequency range $\omega_c^{min} \leq \omega \leq \omega_c^{max}$, which frequency range excludes known resonant oscillation frequencies $\omega_k$ of the aircraft (1).

3. The method of claim 1 or 2, wherein step a) comprises performing a spectral analysis, preferably a Fast Fourier Transformation, FFT, on the sensor unit (4) output signal (SD) and/or on state estimations.

4. The method of any one of claims 1 through 3, wherein step b) comprises performing a spectral analysis, preferably a Fast Fourier Transformation, FFT, on the control signal (u).

5. The method of any one of claims 1 through 4, wherein step c) comprises comparing a difference between an oscillation frequency $\omega_{cu}^*$ of said first oscillation and an oscillation frequency $\omega_{cu}^u$ of said second oscillation with a pre-set, preferably heuristic value $\delta\omega_{cu}$, and wherein step d) comprises adapting said property of the control signal (u) if $|\omega_{cu}^* - \omega_{cu}^u| < \delta\omega_{cu}$.

6. The method of any one of claims 1 through 5, wherein said property in step d) is a bandwidth of the control signal (u).

7. The method of any one of claims 1 through 6, wherein step d) comprises:

   da) defining $\omega_{cu}^m = min(\omega_{cu})$, which is a minimum frequency at which the control unit (2) excites the structure (5);

   db) then, defining a desired frequency $\omega_c^d$ for adaptive tuning of said property, which desired frequency is away from $\omega_{cu}^m$ with a safe margin $\overline{\omega_c}$: $\omega_c^d = \omega_{cu}^m - \overline{\omega}_c$, wherein $\omega_c^{min} < \omega_c^d < \omega_c^{max}$;

   dc) then, defining a linear first order dynamics of adaptation as: $\dot{\omega}_c = k\left(\omega_c^d - \omega_c\right)$, where $k$ is a positive scalar;
   dd) adapting said property of the control signal by means of $\dot{\omega}_c$.

8. The method of claim 7, wherein as an initial value, $\omega_c^d$ is chosen as $\omega_c^d = \omega_c^{init}$, wherein $\omega_c^{init}$ denotes a nominal bandwidth of the control unit (2) used to compute the gains of a feedback controller.

9. The method of any one of claims 1 through 8, wherein in case $\omega_c \neq \omega_c^{init}$, an information signal is output to a pilot of the aircraft (1).

10. An aircraft (1) comprising an elastic structure (5) made from one or a plurality of structural parts (5a-5d), in the latter case interconnected via a plurality of mechanical connections, which parts and connections present inherent elasticity, said aircraft (1) further comprising:

at least one actuator (3), which actuator (3) is mechanically attached to said structure (5);
a control unit (2) for controlling said actuator (3) by means of a control signal (u) generated by the control unit (2); and
at least one sensor unit (4) for measuring a physical property of the aircraft (1);
the control unit (2) being adapted for, during aircraft operation,

a) detecting a first oscillation in an output signal (SD) of the sensor unit (4) and/or in an estimated state of the aircraft (1);
b) detecting a second oscillation in the control signal (u), preferably on a computed control signal, and optionally, if available, also on actuator states;

**characterised in that** the control unit (2) is also adapted for, during aircraft operation:

c) comparing said first oscillation and said second oscillation;
d) based on the comparison in step c), adapting a property of the control signal (u).

11. The aircraft (1) of claim 10, wherein the control unit (2) is further adapted to perform any one of the additional method steps according to claims 2 through 9.

12. The aircraft (1) of claim 10 or 11, comprising a plurality of actuators (3) distributed throughout the structure (5).

13. The aircraft (1) of any one of claims 10 through 12, wherein the at least one actuator (3) is an electrically powered propulsion unit, preferably a propeller unit.

14. The aircraft (1) of any one of claims 10 through 13, comprising an information signal output unit for outputting an information signal to an aircraft operator.

**Patentansprüche**

1. Verfahren zum Betreiben eines Flugzeugs (1), wobei das Flugzeug (1) ein elastisches Skelett (5) umfasst, das aus einem oder einer Mehrzahl von Bauteilen (5a-5d) hergestellt ist, die im letzteren Fall über eine Mehrzahl mechanischer Verbindungen miteinander verbunden sind, wobei die Teile und Verbindungen eine inhärente Elastizität aufweisen, wobei das Flugzeug (1) ferner mindestens einen Aktor (3) umfasst, wobei der Aktor (3) mechanisch an dem Skelett (5) befestigt ist und wobei der Aktor (3) mittels eines Steuersignals (u) gesteuert wird, das von einer Steuereinheit (2) generiert wird, wobei das Flugzeug (1) ferner mindestens eine Sensoreinheit (4) umfasst, um eine physikalische Eigenschaft des Flugzeugs (1) zu messen,
wobei das Verfahren umfasst, während des Betriebs des Flugzeugs:

a) Erfassen einer ersten Schwingung in einem Ausgangssignal (SD) der Sensoreinheit (4) und/oder in einem geschätzten Zustand des Flugzeugs (1);
b) Erfassen einer zweiten Schwingung in dem Steuersignal (u), vorzugsweise an einem berechneten Steuersignal und optional, falls verfügbar, auch an Aktorzuständen; **dadurch gekennzeichnet, dass** das Verfahren ebenfalls umfasst:

c) Vergleichen der ersten Schwingung mit der zweiten Schwingung;
d) auf Basis des Vergleichs in Schritt c) Anpassen einer Eigenschaft des Steuersignals (u).

2. Verfahren gemäß Anspruch 1, wobei die Steuereinheit (2) in einem Frequenzbereich $\omega_c^{min} \leq \omega \leq \omega_c^{max}$ betrieben wird, wobei der Frequenzbereich bekannte resonante Schwingungsfrequenzen $\omega_k$ des Flugzeugs (1) ausschließt.

3. Verfahren gemäß Anspruch 1 oder 2, wobei Schritt a) ein Durchführen einer Spektralanalyse, vorzugsweise einer schnellen Fourier-Transformation, FFT, an dem Ausgangssignal (SD) der Sensoreinheit (4) und/oder an Zustandsschätzungen umfasst.

4. Verfahren gemäß einem der Ansprüche 1 bis 3, wobei Schritt b) ein Durchführen einer Spektralanalyse, vorzugsweise einer schnellen Fourier-Transformation, FFT, an dem Steuersignal (u) umfasst.

5. Verfahren gemäß einem der Ansprüche 1 bis 4, wobei Schritt c) ein Vergleichen einer Differenz zwischen einer Schwingungsfrequenz $\omega_{cu}^{*}$ der ersten Schwingung und einer Schwingungsfrequenz $\omega_{cu}^{u}$ der zweiten Schwingung mit einem voreingestellten, vorzugsweise heuristischen Wert $\delta\omega_{cu}$ umfasst, und wobei Schritt d) ein Anpassen der Eigenschaft des Steuersignals (u) umfasst, wenn $|\omega_{cu}^{*} - \omega_{cu}^{u}| < \partial\omega_{cu}$ ist.

6. Verfahren gemäß einem der Ansprüche 1 bis 5, wobei die Eigenschaft in Schritt d) eine Bandbreite des Steuersignals (u) ist.

7. Verfahren gemäß einem der Ansprüche 1 bis 6, wobei Schritt d) umfasst:

da) Definieren von $\omega_{cu}^{m} = \min(\omega_{cu})$, welches eine minimale Frequenz ist, mit der die Steuereinheit (2) das Skelett (5) anregt;

db) dann Definieren einer gewünschten Frequenz $\omega_{c}^{d}$ zum adaptiven Abstimmen der Eigenschaft, wobei die gewünschte Frequenz über einen Sicherheitsabstand $\overline{\omega}_{c}: \omega_{c}^{d} = \omega_{cu}^{m} - \overline{\omega}_{c}$ von $\omega_{cu}^{m}$ entfernt ist, wobei $\omega_{c}^{min} < \omega_{c}^{d} < \omega_{c}^{max}$ ist;

dc) dann Definieren einer linearen Dynamik erster Ordnung einer Anpassung als: $\dot{\omega}_{c} = k(\omega_{c}^{d} - \omega_{c})$, wobei *k* ein positiver Skalar ist;
dd) Anpassen der Eigenschaft des Steuersignals mittels $\dot{\omega}_{c}$.

8. Verfahren gemäß Anspruch 7, wobei als ein Anfangswert $\omega_{c}^{d}$ als $\omega_{c}^{d} = \omega_{c}^{init}$ gewählt wird, wobei $\omega_{c}^{init}$ eine Nennbandbreite der Steuereinheit (2) bezeichnet, die zum Berechnen der Verstärkungen einer Rückkopplungssteuerung verwendet wird.

9. Verfahren gemäß einem der Ansprüche 1 bis 8, wobei für den Fall, dass $\omega_{c} \neq \omega_{c}^{init}$ ist, ein Informationssignal an einen Piloten des Flugzeugs (1) ausgegeben wird.

10. Flugzeug (1), umfassend ein elastisches Skelett (5), das aus einem oder einer Mehrzahl von Bauteilen (5a-5d) hergestellt ist, die im letzteren Fall über eine Mehrzahl mechanischer Verbindungen miteinander verbunden sind, wobei die Teile und Verbindungen eine inhärente Elastizität aufweisen, wobei das Flugzeug (1) ferner umfasst:

mindestens einen Aktor (3), wobei der Aktor (3) mechanisch an dem Skelett (5) befestigt ist;
eine Steuereinheit (2) zum Steuern des Aktors (3) mittels eines Steuersignals (u), das von der Steuereinheit (2) generiert wird; und
mindestens eine Sensoreinheit (4) zum Messen einer physikalischen Eigenschaft des Flugzeugs (1);
wobei die Steuereinheit (2) dazu angepasst ist, während des Betriebs des Flugzeugs:

a) eine erste Schwingung in einem Ausgangssignal (SD) der Sensoreinheit (4) und/oder in einem geschätzten Zustand des Flugzeugs (1) zu erfassen
b) eine zweite Schwingung in dem Steuersignal (u), vorzugsweise an einem berechneten Steuersignal und optional, falls verfügbar, auch an Aktorzuständen zu erfassen; **dadurch gekennzeichnet, dass** die Steuereinheit (2) ebenfalls dazu angepasst ist, während des Betriebs des Flugzeugs:

c) die erste Schwingung mit der zweiten Schwingung zu vergleichen;
d) auf Basis des Vergleichs in Schritt c) eine Eigenschaft des Steuersignals (u) anzupassen.

11. Flugzeug (1) gemäß Anspruch 10, wobei die Steuereinheit (2) ferner dazu angepasst ist, einen der zusätzlichen Verfahrensschritte gemäß Ansprüchen 2 bis 9 durchzuführen.

12. Flugzeug (1) gemäß Anspruch 10 oder 11, umfassend eine Mehrzahl von Aktoren (3), die über das Skelett (5) verteilt sind.

**13.** Flugzeug (1) gemäß einem der Ansprüche 10 bis 12, wobei der mindestens eine Aktor (3) eine elektrisch angetriebene Vortriebseinheit, vorzugsweise eine Propellereinheit, ist.

**14.** Flugzeug (1) gemäß einem der Ansprüche 10 bis 13, umfassend eine Informationssignal-Ausgabeeinheit zum Ausgeben eines Informationssignals an eine Bedienperson des Flugzeugs.

**Revendications**

**1.** Procédé de fonctionnement d'un aéronef (1), ledit aéronef (1) comprenant une structure élastique (5) faite d'une ou plusieurs parties structurelles (5a-5d), dans ce dernier cas reliées entre elles par une pluralité de liaisons mécaniques, lesquelles parties et liaisons présentent une élasticité inhérente, ledit aéronef (1) comprenant en outre au moins un actionneur (3), lequel actionneur (3) est attaché mécaniquement à ladite structure (5) et lequel actionneur (3) est commandé à l'aide d'un signal de commande (u) généré par une unité de commande (2), ledit aéronef (1) comprenant en outre au moins une unité de capteur (4) pour mesurer une propriété physique de l'aéronef (1), le procédé comprenant, pendant le fonctionnement de l'aéronef (1),

  a) détecter une première oscillation dans un signal de sortie (SD) de l'unité de capteur (4) et/ou dans un état estimé de l'aéronef (1) ;
  b) détecter une deuxième oscillation dans le signal de commande (u), de préférence sur un signal de commande calculé, et optionnellement, s'ils sont disponibles, également sur des états d'actionneur ; **caractérisé en ce que** le procédé comprend également :

  c) comparer ladite première oscillation et ladite deuxième oscillation ;
  d) sur la base de la comparaison dans l'étape c), adapter une propriété du signal de commande (u).

**2.** Procédé de la revendication 1, dans lequel l'unité de commande (2) fonctionne dans une plage de fréquence $\omega_c^{min} \leq \omega \leq \omega_c^{max}$, laquelle plage de fréquence exclut des fréquences d'oscillation de résonance connues $\omega_k$ de l'aéronef (1).

**3.** Procédé de la revendication 1 ou 2, dans lequel l'étape a) comprend réaliser une analyse spectrale, de préférence une transformée de Fourier rapide, FFT, sur le signal de sortie (SD) d'unité de capteur (4) et/ou sur des estimations d'état.

**4.** Procédé de l'une quelconque des revendications 1 à 3, dans lequel l'étape b) comprend réaliser une analyse spectrale, de préférence une transformée de Fourier rapide, FFT, sur le signal de commande (u).

**5.** Procédé de l'une quelconque des revendications 1 à 4, dans lequel l'étape c) comprend comparer une différence entre une fréquence d'oscillation $\omega_{cu}^*$ de ladite première oscillation et une fréquence d'oscillation $\omega_{cu}^u$ de ladite deuxième oscillation avec une valeur préréglée, de préférence heuristique, $\delta\omega_{cu}$, et dans lequel l'étape d) comprend adapter ladite propriété du signal de commande (u) si $|\omega_{cu}^* - \omega_{cu}^u| < \delta\omega_{cu}$.

**6.** Procédé de l'une quelconque des revendications 1 à 5, dans lequel ladite propriété dans l'étape d) est une largeur de bande du signal de commande (u).

**7.** Procédé de l'une quelconque des revendications 1 à 6, dans lequel l'étape d) comprend :

  da) définir $\omega_{cu}^m = \min(\omega_{cu})$, qui est une fréquence minimum à laquelle l'unité de commande (2) excite la structure (5) ;

  db) ensuite, définir une fréquence souhaitée $\omega_c^d$ pour un accord adaptatif de ladite propriété, laquelle fréquence souhaitée est éloignée de $\omega_{cu}^m$ avec une marge de sécurité $\overline{\omega_c} : \omega_c^d = \omega_{cu}^m - \overline{\omega}_c$, dans laquelle

$$\omega_c^{min} < \omega_c^d < \omega_c^{max} \; ;$$

dc) ensuite, définir une dynamique linéaire de premier ordre d'adaptation telle que : $\dot{\omega}_c = k(\omega_c^d - \omega_c)$ , où $k$ est un scalaire positif ;

dd) adapter ladite propriété du signal de commande à l'aide de $\dot{\omega}_c$.

8. Procédé de la revendication 7, dans lequel en valeur initiale, $\omega_c^d$ est choisi tel que $\omega_c^d = \omega_c^{init}$ , dans laquelle $\omega_c^{init}$ désigne une largeur de bande nominale de l'unité de commande (2) utilisée pour calculer les gains d'un dispositif de commande à rétroaction.

9. Procédé de l'une quelconque des revendications 1 à 8, dans lequel, dans le cas où $\omega_c \neq \omega_c^{init}$ , un signal d'information est sorti vers un pilote de l'aéronef (1).

10. Aéronef (1) comprenant une structure élastique (5) faite d'une ou plusieurs parties structurelles (5a-5d), dans ce dernier cas reliées entre elles par une pluralité de liaisons mécaniques, lesquelles parties et liaisons présentent une élasticité inhérente, ledit aéronef (1) comprenant en outre :

au moins un actionneur (3), lequel actionneur (3) est attaché mécaniquement à ladite structure (5) ; et
une unité de commande (2) pour commander ledit actionneur (3) à l'aide d'un signal de commande (u) généré par l'unité de commande (2) ; et
au moins une unité de capteur (4) pour mesurer une propriété physique de l'aéronef (1) ;
l'unité de commande (2) étant adaptée pour, pendant le fonctionnement de l'aéronef,

a) détecter une première oscillation dans un signal de sortie (SD) de l'unité de capteur (4) et/ou dans un état estimé de l'aéronef (1) ;
b) détecter une deuxième oscillation dans le signal de commande (u), de préférence sur un signal de commande calculé, et optionnellement, s'ils sont disponibles, également sur des états d'actionneur ;

**caractérisé en ce que** l'unité de commande (2) est également adaptée pour, pendant le fonctionnement de l'aéronef :

c) comparer ladite première oscillation et ladite deuxième oscillation ;
d) sur la base de la comparaison dans l'étape c), adapter une propriété du signal de commande (u).

11. Aéronef (1) de la revendication 10, dans lequel l'unité de commande (2) est adaptée en outre pour réaliser l'une quelconque des étapes de procédé supplémentaires selon les revendications 2 à 9.

12. Aéronef (1) de la revendication 10 ou 11, comprenant une pluralité d'actionneurs (3) répartis sur toute la structure (5).

13. Aéronef (1) de l'une quelconque des revendications 10 à 12, dans lequel le au moins un actionneur (3) est une unité de propulsion à motorisation électrique, de préférence une unité à hélice.

14. Aéronef (1) de l'une quelconque des revendications 10 à 13, comprenant une unité de sortie de signal d'information pour sortir un signal d'information vers un opérateur d'aéronef.

Data collected for "t" seconds

$\mathbf{d}_{alt}$    $\mathbf{d}_{att}$    $\mathbf{u}$    D

2b

if $|\omega_{cu}^{alt} - \omega_{cu}^{u}| < \delta\omega_{cu}$:

   $\omega_{cu} \leftarrow \omega_{cu}^{alt}$ append

if $|\omega_{cu}^{att} - \omega_{cu}^{u}| < \delta\omega_{cu}$:

   $\omega_{cu} \leftarrow \omega_{cu}^{att}$ append

Detection

fft Analysis

2ab

**fft**

$\omega_{cu}^{alt}$   $\omega_{cu}^{att}$

**fft**

$\delta\omega_{cu}$ → compare and append ← $\omega_{cu}^{u}$ **fft**

2baa

$\omega_{cu}$

Action

$$\omega_{cu}^{m} = \min(\omega_{cu})$$

$\omega_c^{init}$    $\bar{\omega}_c$

$$\omega_c^{d} = \omega_{cu}^{m} - \bar{\omega}_c, \quad \omega^{min} < \omega_c^{d} < \omega_c^{max}$$

$\dot{\omega}_c$   $\omega_c^{init}$

2bb

$$\dot{\omega}_c = k(\omega_c^{d} - \omega_c)$$

$\omega_c$

2d

Inform Pilot ← Y — $\omega_c \neq \omega_c^{init}$ ?

2c    $\omega_c$

2a

Controller Gains e.g.:

$K_p(\omega_c)$, $K_d(\omega_c)$, $K_I(\omega_c)$ → Controller ← desired inputs

measurements estimations

2

$u$

Fig. 2

Measured data and control input

- - - sensor data
——— control data

Unit of the signal

Single-Sided Amplitude Spectrum (FFT)

- - - fft of sensor data
——— fft of control data

|P1(f)|

f (Hz)

Control Bandwidth Adaption

——— adapted ctrl bandwith
—·—·— min harmonics
- - - desired ctrl bandwidth
- - - initial ctrl bandwidth
✳

ctrl bandwidth and margin

seconds

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019168867 A1